# EUROPEAN PATENT SPECIFICATION

(11) **EP 1 876 362 B1**
(45) Date of publication and mention of the grant of the patent: **27.01.2010**
(21) Application number: 07075552.5
(22) Date of filing: 03.07.2007
(51) Int. Cl.: F16B 37/04

(54) **Securing assembly**
Sicherungsanordnung
Ensemble de fixation

(30) Priority: 06.07.2006 NL 1032124
(43) Date of publication of application: 09.01.2008
(73) Proprietor: J. van Walraven Holding B.V., 3641 RK Mijdrecht (NL)
(72) Inventor: van Walraven, Jan, 3641 GP Mjidrecht (NL)
(74) Representative: Houben, Christiaan Hein Willem Frans

(56) References cited:
- EP-A1- 1 039 153
- US-A1- 3 432 197
- US-A1- 3 434 748
- US-A1- 2003 185 643

## Description

The invention relates to a securing assembly according to the preamble of claim 1.

Such an assembly is known from the patent application NL 1029499 in the name of the Applicant which is not a prior publication. It should be noted that the term C-shaped profiles is also understood as referring to so-called strut profiles, in which the flanged edges are bent downwards.

From US 3 434 748 is known a device for the assembly of metallic sectional structures, in particular a crossmember and an upright member provided with a slot delimited by flanges. The crossmember is provided with a locking member displaceably mounted in its core. The locking member is connected to a piston via a rod, which rod passes through a hole in a wall of the cross member. The rod is provided with spring means which continuously urge the piston away from the wall, and thus urge the locking member into the core. When a wedge shaped tool is fitted into an opening of the crossmember, it presses the piston against the spring, and the locking member is moved via the rod into an extended position protruding outside the crossmember. In this position the locking member protrudes a sufficient distance from the crossmember that it may be engaged in the upright through the slot thereof. By rotating the cross member 90° and removing the tool, the locking member is then applied against the flanges of the upright by the spring means.

It is an object of the invention to provide an alternative securing assembly.

This object is achieved according to the invention by a securing assembly according to claim 1.

In the unloaded state, the distance between the bearing element and the anchoring part at the location of the receiving spaces is smaller than the thickness of the flanges of the profiled section element. After the anchoring part has been introduced into the slot of the profiled section element, the wedge element is pressed between the bearing element and the anchoring part. Due to the wedge action, the bearing element and the anchoring part are pushed apart and the distance between them is increased to such an extent that the securing assembly can be rotated, with the anchoring part gripping behind the flanges. When the wedge element is withdrawn, the spring members push the anchoring part and the bearing element towards one another again, so that the anchoring part and the bearing element engage with the flanges in a clamping manner. The clamping action of one or more spring members is preferably such that it is possible to move the assembly along the profiled section element by hand.

Preferred embodiments of the invention are defined in the dependent claims.

The invention will be explained below in more detail by means of a number of preferred embodiments with reference to the drawing, in which:
Figs 1-4 show a perspective view, a top view, a side view and a front view, respectively, of a preferred embodiment of a securing assembly according to the invention,
Fig. 5 shows a perspective view of a support element of the securing assembly from Fig. 1,
Fig. 6 shows a perspective view of an operable body of an alternative of the embodiment from Fig. 1,
Figs 7-10 show a perspective view, a side view, a top view and a front view, respectively, of another preferred embodiment of a securing assembly according to the invention,
Fig. 11 shows a perspective view of a support element of the securing assembly from Fig. 7,
Figs 12 and 13 show a perspective view and a side view, respectively, of yet another preferred embodiment according to the invention,
Figs 14 and 15 show a perspective view and a top view, respectively, of a support element of the securing assembly from Fig. 14,
Fig. 16 shows a perspective view of yet another preferred embodiment according to the invention, and
Fig. 17 shows a perspective view of a support element of the securing assembly from Fig. 16.

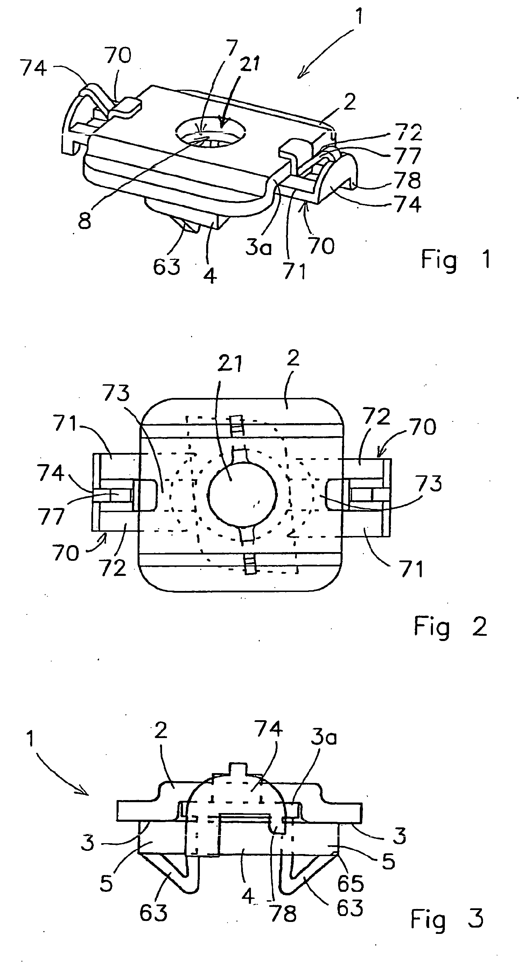

Figs 1-4 show a securing assembly 1 comprising a metal bearing element 2, which has a bearing face 3 which is designed to bear against the outside of a profiled section element. The bearing element is substantially plate-shaped and, in the illustrated embodiment, has a central opening 21. In the illustrated embodiment, the bearing element 2 furthermore has a central area 3a which is recessed with respect to the bearing face 3, but could also be flat. Furthermore, the assembly 1 comprises an elongate metal anchoring part 4, which is situated on the bottom side of the bearing face 3 of the bearing element 2 and has axial end parts 5. The anchoring part 4 has a central threaded bore 7 which extends from the upper side to the bottom side through the anchoring part 4. Adjoining the bore 7, two apertures 8 are provided which are diametrically opposite one another and extend from the upper side to the bottom side of the anchoring part 4. It should be noted that the anchoring part does not necessarily have to be designed as a nut with a central bore as is shown in the embodiments illustrated, in which a threaded end can be screwed into the bore, but that the anchoring part could, for example, also be designed as a threaded end or rod-shaped body attached by welding, riveting or another method.

The assembly 1 furthermore comprises a support element 6 for the anchoring part 4. The support element 6 is preferably made of plastic and is connected to the bearing element 2 and supports the anchoring part 4.

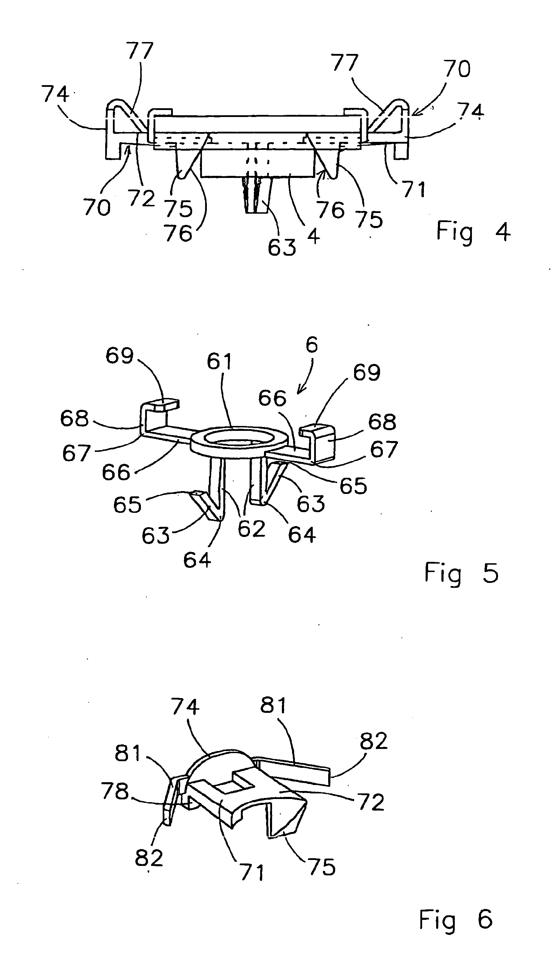

The support element 6, which is illustrated separately in Fig. 5, in this embodiment comprises an annular base body 61 which, in the assembled state (Figs 1-4), bears against the bottom side of the bearing element 2. Two legs 62 extend downwards from the annular base body 61 and, in the assembled state (Figs 1-4), extend through the anchoring part 4, with the legs 62 being accommodated in the apertures 8 in the anchoring part 4. At the bottom end of the legs 62, a hook member 63 is in each case provided which is connected to the leg 62 by means of a flexible hinge point. In the illustrated example, the hook member 63 extends in a direction corresponding to the longitudinal direction of the anchoring part 4 and upwards, so that the free end 65 of the hook member 63 engages with the anchoring part 4 and supports the latter. However, the hook member could also extend, for example, in the transverse direction of the anchoring part. One aspect of the invention which can also be applied separately from the present invention is the fact that the hook members 63, in the form as illustrated, have the advantage that they can be introduced more easily through the central opening 7 and the adjacent apertures 8 in the anchoring part 4 during assembly of the assembly 1 than, for example, solid projections, as are known from the prior art.

The support element furthermore has two arms 66 which extend diametrically from the base body 61 in the transverse direction of the anchoring part 4. At the end 67 of the arms 66, which end is remote from the base body 61, an upright end edge 68 is in each case provided which extends from the arms upwards and, in the assembled state, runs along the edge of the bearing element 2, as can be seen in Fig. 1. At the free end of the upright end edge 68, a gripping lip 69 is provided which grips over the edge of the bearing element 2 and holds the latter securely.

The securing assembly 1 furthermore comprises a wedge mechanism comprising two operable bodies 70. The operable bodies 70 have two substantially parallel legs 71 and 72, which are connected at one end by a bridge part 73 and at the opposite end by an actuating member 74. One of the legs 71, 72 is provided with a wedge element 75. The wedge element 75 has a sloping wedge face 76 which engages with the edge of the anchoring part 4. A spring lip 77 is integrally formed on the actuating member 74 and engages with one end 78 on the end edge 68 of the support element 6. In the assembled state, the bridge part 73 is accommodated in a space which is delimited by the arm 66, the end edge 68 and the base body 61 of the support 6 and the bearing element 2, in such a manner that it can be moved past the arm 66.

### The securing assembly 1 operates as follows:

The anchoring part 4 of the securing assembly 1 is aligned with the longitudinal slot of a profiled section element (not shown). Subsequently, the actuating members 74 of the wedge mechanism are pressed towards one another by the fitter between thumb and index finger. As a result thereof, the wedge elements 75 are pressed inwards, as a result of which the wedge faces 76 slide along the edges of the anchoring part 4 and the anchoring part 4 is moved away from the bearing element by the wedge action. Between the bearing element 2 and the anchoring part 4 a distance is now created which is such that a receiving space is created between the bearing element 2 and each axial end part 5 of the anchoring part 4 which is accessible from the side of the securing assembly 1. Each of the receiving spaces serves to receive a flange of the profiled section element.

After the bearing element 2 and the anchoring part 4 have been moved apart, the anchoring part 4 can be introduced into the profiled section element through the longitudinal slot in such a manner that subsequently, after rotation of the securing assembly 1, preferably through a quarter turn, the anchoring part 4 - in a pre-fitting state - extends at an angle, preferably substantially at right angles, with respect to the longitudinal slot, so that the flanges are in the receiving spaces and the anchoring part 4 grips behind the flanges of the profiled section element.

When the bearing element 2 and the anchoring part 4 are moved apart, a spring force is generated in the support element 6 in one or more locations. This can be achieved in various ways through deformation of one or more parts of the support element 6.

Firstly, a spring force can be generated by bending the hook members 63 with respect to the legs 62.

Secondly, as a result of the bearing element 2 and the anchoring part 4 being moved apart, the annular base body 61 can be pulled along with the anchoring part 4 via the legs 62, so that it comes off the bearing element 2. However, the ends of the arms 66 remain pressed against the bearing element 2 through the upright end edge 68 and the gripping lip 69, as a result of which the arms 66 are bent and a spring force is generated therein.

As described above, the spring force can be generated in both locations simultaneously, as a result of which the spring members of the assembly 1 are formed by the arms 66 and the hook members 63. However, it is also possible that the arms 66 are of rigid design and only the hook members 63 can be deformed. In that case, the spring members of the assembly 1 are formed by the hook members 63. Furthermore, it is also possible for the hook members 63 to be of rigid design and the arms 66 to be deformable, in which case the spring members of the assembly 1 are formed by the arms 66.

The spring force generated by the spring members ensures that after the fitter releases the actuating members 74, the bearing element 2 and the anchoring part 4 are moved towards one another so that a clamping action on the flanges of the profiled section element results. The clamping action of the one or more spring members is preferably such that it is possible to move the assembly 1 along the profiled section element by hand in such a manner that the assembly 1 can be positioned in the desired location on the profiled section element in a simple manner.

Due to the bearing element 2 and the anchoring part 4 being moved towards one another by the spring members, the wedge element 75 is pushed away laterally as a result of the pressure from the anchoring part 4 on the wedge face 76. Furthermore, the spring force generated in the spring lip 77 by the deformation thereof while being pushed inwards results in a restoring force, as a result of which the wedge element 75 between the bearing element 2 and the anchoring part 4 is pulled out when the fitter releases the actuating members. In the pre-fitting state, the wedge element 75 is situated between the flanges of the profiled section element.

Each of the actuating members 74 is furthermore provided with a blocking lug 78 which, in the pre-fitted state, is situated against or near one of the flanged edges of the profiled section element. The blocking lug 78 ensures that the securing assembly 1 cannot be rotated out of the pre-fitting state unless the anchoring part 4 is moved downwards with respect to the bearing element 2 by pushing in the actuating members 74, so that the blocking lug 78 can be lifted over the top surface of the flange and the assembly 1 can be rotated. In the illustrated embodiment, a blocking lug 78 is provided on one side of each actuating member 74 so that one direction of rotation of the securing assembly is blocked as a result. The other direction of rotation is blocked as a result of the specific shape of the anchoring part 4. However, it is also conceivable to provide blocking lugs in order to block two directions of rotation.

Fig. 6 shows an alternative embodiment of an operable body 80 of a wedge mechanism which substantially corresponds to the operable element 70 from Fig. 1. Instead of a spring lip 77 which engages with the end edge 68 of the support element 6, the operable body 80 has two spring lips 81 which extend laterally and obliquely from the actuating member 74 and at an acute angle to the legs 71, 72 in the direction of the bearing element 2 in order to rest on the edge of the bearing element 2 at their respective ends 82.

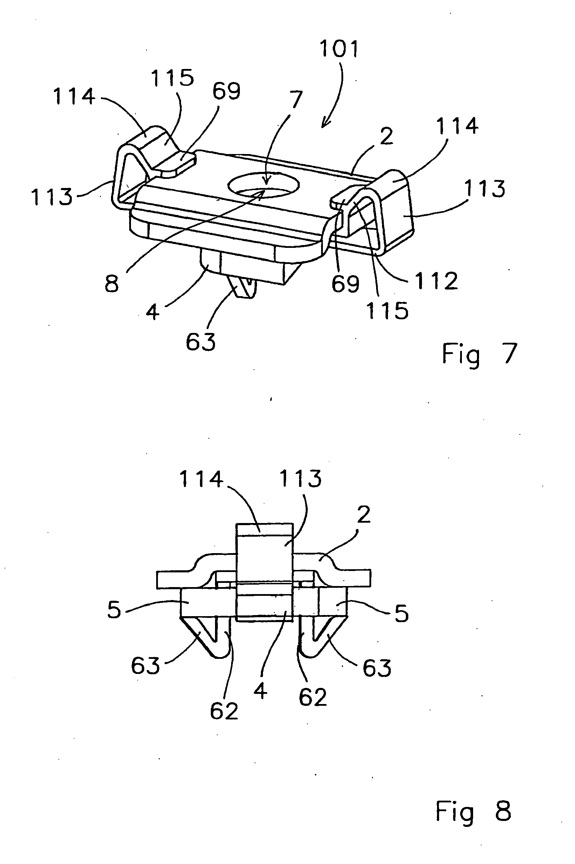

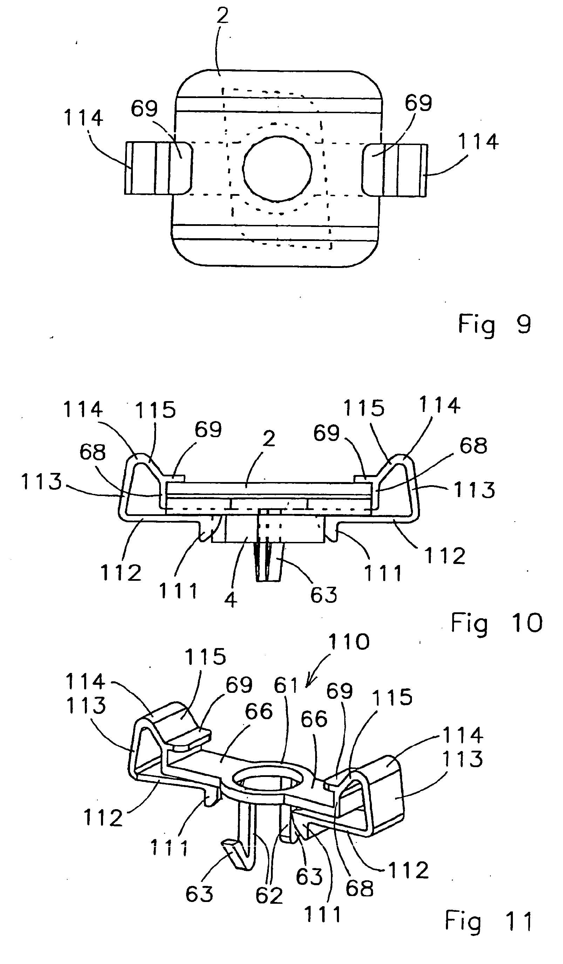

Figs 7-10 show another preferred embodiment of a securing assembly according to the invention. This securing assembly, which is denoted overall by reference numeral 101, shows great similarities in design and operation with the above-described embodiments and identical parts are therefore denoted by the same reference numerals. Fig. 11 shows the support element 110 of the securing assembly 101 separately. Parts of the support element 110 which are identical to parts of the support element 6 illustrated in Fig. 5 are denoted by the same reference numerals and reference is made to the description of support element 6 associated with Fig. 5 for a description thereof.

The support element 110 furthermore has wedge elements 111, each of which is provided at the end of a leg 112. The leg 112 extends substantially parallel to and partially under the arm 66. From the other end of the leg 112, the operating surface 113 extends upwards, preferably at right angles. By means of a resilient bending hinge 114, the top end of the operating surface 113 is connected to a connecting part 115 which extends obliquely downwards from the bending hinge 114 in the direction of the gripping lip 69 and is connected to the latter. Thus, a wedge mechanism, comprising the restoring spring members 114, the wedge element 111 and the actuating members 113, is formed integrally with the support element. The support element 110 is preferably made from plastic. The operational principle of this embodiment is similar to that of the embodiments which have already been described above. It should be noted that with this embodiment, the actuating members are not provided with blocking lugs in order to prevent rotation of the assembly 101. In this embodiment, the wedge elements 111, which are situated between the flanged edges in the pre-fitting state, will block the rotation when they abut the flanged edges of the profiled section element during rotation.

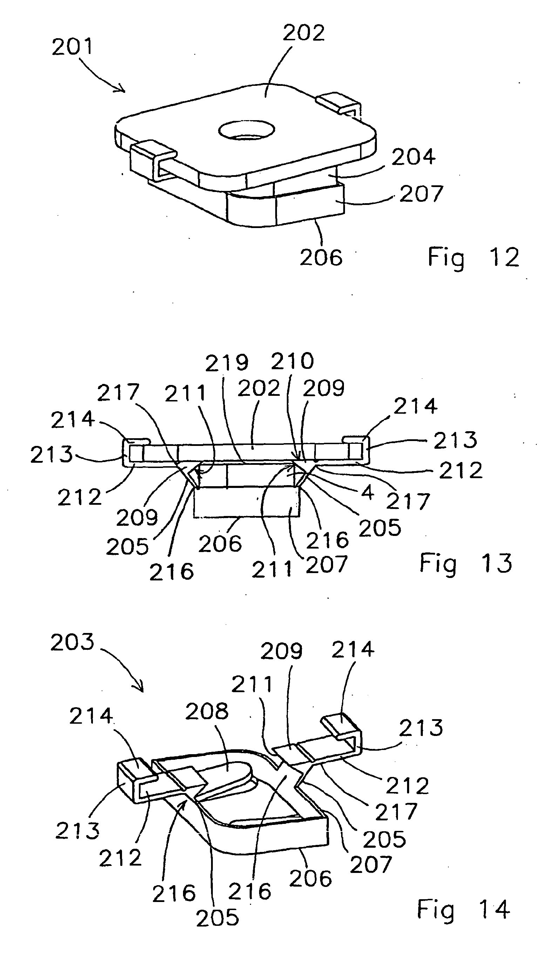

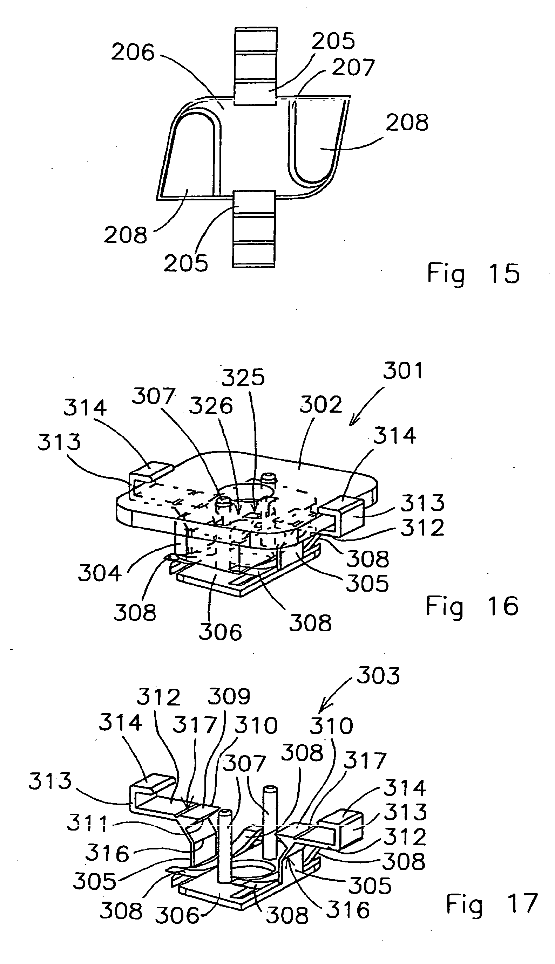

Figs 12 and 13 show a securing assembly 201 which, in this case, has a completely flat bearing element 202 and an anchoring part 204. The assembly 201 furthermore comprises a support element 203 which is shown separately in Figs 14 and 15 and which is preferably produced in one piece from plastic. The support element 203 has legs 205, each of which extends along a longitudinal side of the anchoring part 204 and which are arranged opposite one another. The support element 203 furthermore has a bottom 206 with an upright peripheral edge 207, which bottom 206 with peripheral edge 207 connects the bottom ends of the legs 205 to one another. The legs 205 are connected to the edge 207 at a hinge axis 216. The bottom 206 extends underneath the anchoring part 204 and the peripheral edge 207 extends around the periphery of the anchoring part 204, so that the latter is locked in the transverse direction. Spring lips 208 project upwards from the bottom 206 and engage with the anchoring part 204. In the case illustrated here, the spring lips 208 are formed integrally with the bottom 206. However, it is also possible to arrange a separate spring element with spring members on the bottom so as to engage with the anchoring part 204.

At the top end of the legs 205, a wedge element 209 is in each case provided, a top surface 210 of which engages with the bearing element 202 and a bottom wedge face 211 of which engages with the edge of the anchoring part 204. At the top end of the legs 205, is connected by means of an integral hinge 217 or the like, an arm 212 with an upright end edge 213 which extends along the bearing element 202 substantially at right angles with respect to the arm 212. At the top end of the end edge 213, there is a gripping lip 214 which grips over the edge of the bearing element 202 and holds the latter. Thus, the arms 212 with the upright edge 213 and the gripping lips in this embodiment serve as coupling members.

In this embodiment, the wedge mechanism is an integral part of the support element. With the securing assembly 201, the upright end edges 213 serve as actuating members for operating the wedge mechanism. When the fitter positions the securing assembly 201 against a profiled section element and pushes the operating surfaces 213 towards one another between his thumb and index finger, the arms 205 are pivoted inwards, hinging about hinge axis 216, as a result of which the wedge element 209, by means of the wedge face 211, applies a downwards force on the anchoring part 204, the bottom side of which is pushed against the bottom 206 counter to the spring force of the spring members 208. As a result, the distance 219 between the bearing element 202 and the upper side of the anchoring part 204 is increased and the securing assembly can be rotated so that the flanges of the profiled section element can be accommodated in the receiving spaces in the same manner as described above with reference to Figs 1-5. When the operating surfaces 213 are then released, the arms 205, as a result of the resilience of the material, pivot back at hinge 216, so that the hinge 216 thus forms a restoring spring.

Fig. 16 shows a securing assembly 301 which, in this case, has a completely flat bearing element 302 and an anchoring part 304. The anchoring part 304 has a preferably threaded central bore 325. Adjoining the bore 325, two apertures 326 are provided which extend through the anchoring part 204.

The assembly 301 furthermore comprises a support element 303 which is shown separately in Fig. 17 and which is preferably produced in one piece from plastic. The support element 303 has legs 305 located opposite one another, each of which extends along a longitudinal side of the anchoring part 304 and is bent at a hinge axis 316. The support element 303 furthermore has a bottom 306, which bottom 306 connects the bottom ends of the legs 305 to one another. The bottom 306 extends underneath the anchoring part 304. Spring members 308 project from the bottom 306 upwards and engage with the bottom side of the anchoring part 304. In the case illustrated here, the spring members 308 are formed integrally with the bottom 306. However, it is also possible to provide a separate spring element with spring members on the bottom in order to engage with the anchoring part 304.

Furthermore, pins 307 extend from the bottom which are accommodated in the apertures 326 in the anchoring part 304. The pins 307 secure the anchoring part 304 in the transverse direction, but allow the anchoring part 304 to be displaced in the axial direction along the pins 307.

At the top end of the legs 305, a wedge element 309 is provided in each case, a top surface 310 of which engages with the bearing element 302 and a bottom wedge face 311 of which engages with the edge of the anchoring part 304. At the top end of the legs 305, an arm 312 is by means of an integral hinge 317 or the like to an upright end edge 313 which extends along the bearing element 302 substantially at right angles with respect to the arm 312. At the top end of the end edge 313, a gripping lip 314 is in each case provided which grips over the edge of the bearing element 302 and holds the latter. Thus, the arms 312 with the upright edge 313 and the gripping lips 314 in this embodiment serve as coupling members.

With the securing assembly 301, the upright end edges 313 serve as actuating members for the wedge mechanism which is therefore an integral part of the support element. When the fitter positions the securing assembly 301 against a profiled section element and pushes the actuating members 313 towards one another between his thumb and index finger, the arms 305 are pivoted inwards, hinging about hinge axis 316, as a result of which the wedge element 309, by means of the wedge face 311, applies a downwards force on the anchoring part 304, the bottom side of which is pushed against the bottom 306 counter to the spring force of the spring members 308. As a result, the distance between the bearing element 302 and the upper side of the anchoring part 304 is increased and the securing assembly 301 can be rotated so that the flanges of the profiled section element can be received in the receiving spaces in the same manner as described above with reference to Figs 1-5. When the operating surfaces 313 are then released, the arms 305, as a result of the resilience of the material, pivot back at hinge 316, so that the arm 305 at the hinge 316 thus forms a restoring spring.

## Claims

1. Securing assembly for securing an object to a profiled section element with flanges which delimit a longitudinal slot between them, in particular a profiled section element of the C-profile type, which securing assembly comprises:
- a metal bearing element (2; 202; 302) which has a bearing face (3) which is designed to bear against the outside of the profiled section element,
- an elongate metal anchoring part (4; 204; 304) which is situated on the bottom side of the bearing face (3) of the bearing element (2; 202; 302) and has axial end parts (5),
- a support element (6; 110; 203; 303) for the anchoring part (4; 204; 304), which support element is provided with one or more spring members (63, 66; 208; 308) and is optionally removably, connected to the bearing element (2; 202; 302) and which support element (6; 110; 203; 303) supports the anchoring part (4; 204; 304) resiliently in such a manner that the anchoring part (4; 204; 304) can be moved up and down with respect to the bearing element (2; 202; 302),
in which there is a receiving space between the bearing element (2; 202; 302) and each axial end part (5) of the anchoring part (4; 204; 304), which receiving space is accessible from the side of the securing assembly (1; 101; 201; 301) and is designed for receiving a flange of the profiled section element,
in such a manner that the securing assembly (1; 101; 201; 301) and its anchoring part (4; 204; 304) can be aligned with the longitudinal slot and the anchoring part (4; 204; 304) can be introduced into the profiled section element through the longitudinal slot and in such a manner that subsequently, after rotation of the securing assembly (1; 101; 201; 301), preferably through a quarter turn, the anchoring part (4; 204; 304) - in a pre-fitting state - extends at an angle, preferably substantially at right angles, with respect to the longitudinal slot, so that the flanges are in the receiving spaces and the anchoring part (4; 204; 304) grips behind the flanges of the profiled section element, with the support element (6; 110; 203; 303) clamping the flanges of the profiled section element between the anchoring part (4; 204; 304) and the bearing element (2; 202; 302),
**characterized in that**
the securing assembly (1; 101; 201; 301) furthermore comprises a wedge mechanism which is effective between the bearing element (2; 202; 302) and anchoring part (4; 204; 304), which wedge mechanism comprises at least one wedge element (75; 111; 209; 309) which can be introduced between the bearing element (2; 202; 302) and the anchoring part (4; 204; 304), with the wedge element (75; 111; 209; 309) engaging with the anchoring part (4; 204; 304) and with the bearing element (2; 202; 302) in such a manner that when the wedge mechanism is operated, the anchoring part (4; 204; 304) is pushed down with respect to the bearing element (2; 202; 302) and the flanges of the profiled section element can be received in the receiving spaces when the securing assembly is rotated.

2. Securing assembly according to claim 1, in which the wedge mechanism comprises an actuating member (74; 113; 213; 313) which is connected to the wedge element (75; 111; 209; 309) and, upon operation of the latter, the wedge element (75; 111; 209; 309) is introduced into a space between the bearing element (2; 202; 302) and the anchoring part (4; 204; 304).

3. Securing assembly according to claim 1 or 2, in which two actuating members (74; 113; 213; 313) are arranged opposite one another in order to operate the wedge mechanism, which actuating members (74; 113; 213; 313) can be moved towards one another by a fitter by pressing them together.

4. Securing assembly according to one of the preceding claims, in which the wedge mechanism is positioned in such a manner that it can be operated at right angles to the longitudinal axis of the anchoring part (4; 204; 304).

5. Securing assembly according to one of claims 1-4, in which the wedge element (111; 209; 309) is movably connected to the support element (110; 203; 303).

6. Securing assembly according to one of the preceding claims, in which the wedge mechanism comprises a restoring spring member (77; 81; 114; 216; 305, 316) that is designed to bring the wedge mechanism back to an unoperated state from an operated state.

7. Securing assembly according to claim 6, in which the restoring spring member (77; 81; 114; 216; 305, 316) is connected to the wedge element (75; 111; 209; 309) in order to withdraw the latter from the operated state from the space between the bearing element (2; 202; 302) and the anchoring part (4; 204; 304).

8. Securing assembly according to claim 6 or 7, in which the restoring spring member (81) is bearing against the metal bearing element (2).

9. Securing assembly according to one of the preceding claims, in which the support element (6; 203; 303) is provided with legs (62; 205; 305), each of which extends in a direction away from the bearing element (2) up to a bottom end of the respective leg situated under the anchoring part (4; 204; 304).

10. Securing assembly according to claim 9, in which the anchoring part (4) is provided with apertures (8) through which the legs (62) extend.

11. Securing assembly according to claim 10, in which the apertures (8) in the anchoring part (4) adjoin a preferably threaded bore (7) provided in the anchoring part.

12. Securing assembly according to one of claims 9-11, in which the bottom end of at least one of the legs (62) is provided with the spring member (63) , which spring member grips behind the bottom side of the anchoring part (4).

13. Securing assembly according to one of the preceding claims, in which the support element (203; 303) has legs (205; 305), each of which extends along a longitudinal side of the anchoring part (204; 304), preferably two legs which are arranged opposite one another.

14. Securing assembly according to one of the preceding claims, in which the support element (203; 303) has a bottom (206; 306) which connects the bottom ends of the legs (205; 305) to one another, and which extends under the anchoring part (204; 304).

15. Securing assembly according to claim 14, in which the one or more spring members (208; 308) project upwards from the bottom (206; 306) and engage with the anchoring part (204; 304).

16. Securing assembly according to one of the preceding claims, in which the support element (6) comprises an annular body (61) which is connected to the bearing element (2) by means of coupling members (66, 68, 69) and from which the legs (62) extend.

17. Securing assembly according to one of the preceding claims, in which the support element (110; 203; 303) and the wedge mechanism are produced in one piece, preferably from plastic.

18. Securing assembly according to one of claims 1-16, in which the support element (6) and the wedge mechanism are formed as separate elements, preferably from plastic.

## Patentansprüche

1. Befestigungseinheit zum Befestigen eines Objekts an einem Profilelement mit Flanschen, welche zwischen sich einen Längsschlitz begrenzen, insbesondere einem Profilelement des C-Profiltyps, wobei die Befestigungseinheit umfasst:
- ein Metall-Lagerelement (2; 202; 302), welches eine Lagerfläche (3) hat, welche so ausgebildet ist, dass sie an der Außenseite des Profilelements lagern kann,
- ein längliches Metall-Ankerteil (4; 204; 304), welches auf der Bodenseite der Lagerfläche (3) des Lagerelements (2; 202; 302) angeordnet ist und axiale Endteile (5) hat,
- ein Tragelement (6; 110; 203; 303) für das Ankerteil (4; 204; 304), wobei das Tragelement mit ein oder mehreren Federelementen (63, 66; 208; 308) versehen ist und optional entfernbar mit dem Lagerelement (2; 202; 302) verbunden ist, und wobei das Tragelement (6; 110; 203; 303) das Ankerteil (4; 204; 304) elastisch in der Weise abstützt, dass das Ankerteil (4; 204; 304) in Bezug zu dem Lagerelement (2; 202; 302) auf und ab bewegt werden kann,
in welchem ein Aufnahmeraum zwischen dem Lagerelement (2; 202; 302) und jedem axialen Endteil (5) des Ankerteils (4; 204; 304) vorgesehen ist, wobei der Aufnahmeraum von der Seite der Befestigungseinheit (1; 101; 201; 301) zugänglich ist und zum Aufnehmen eines Flansches des Profilelements ausgebildet ist,
derart, dass die Befestigungseinheit (1; 101; 201; 301) und ihr Ankerteil (4; 204; 304) mit dem Längsschlitz ausgerichtet werden kann und das Ankerteil (4; 204; 304) in das Profilelement durch den Längsschlitz und in der Weise eingeführt werden kann, dass anschließend, nach Drehung der Befestigungseinheit (1; 101; 201; 301), vorzugsweise um eine Vierteldrehung, sich das Ankerteil (4; 204; 304) - in einem vormontierten Zustand - in einem Winkel erstreckt, vorzugsweise im Wesentlichen in rechten Winkeln, in Bezug zu dem Längsschlitz, so dass die Flansche in den Aufnahmeräumen sind und das Ankerteil (4; 204; 304) hinter die Flansche des Profilelements greift, wobei das Tragelement (6; 110; 203; 303) die Flansche des Profilelements zwischen dem Ankerteil (4; 204; 304) und dem Lagerelement (2; 202; 302) einklemmt,
**dadurch gekennzeichnet, dass**
die Befestigungseinheit (1; 101; 201; 301) ferner einen Keilmechanismus umfasst, welcher zwischen dem Lagerelement (2; 202; 302) und dem Ankerteil (4; 204; 304) wirksam ist, wobei der Keilmechanismus wenigstens ein Keilelement (75; 111; 209; 309) umfasst, welches zwischen das Lagerelement (2; 202; 302) und das Ankerteil (4; 204; 304) eingeführt werden kann, wobei das Keilelement (75; 111; 209; 309) an das Ankerteil (4; 204; 304) und an das Lagerelement (2; 202; 302) in der Weise angreift, dass, wenn der Keilmechanismus betätigt wird, das Ankerteil (4; 204; 304) in Bezug zu dem Lagerelement (2; 202; 302) nach unten gedrückt wird und die Flansche des Profilelements in den Aufnahmeräumen aufgenommen werden können, wenn die Befestigungseinheit gedreht wird.

2. Befestigungseinheit nach Anspruch 1, in welcher der Keilmechanismus ein Betätigungselement (74; 113; 213; 313) umfasst, welches mit dem Keilelement (75; 111; 209; 309) verbunden ist und bei einem Einsatz des Letzteren, das Keilelement (75; 111; 209; 309) in einen Raum zwischen dem Lagerelement (2; 202; 302) und dem Ankerteil (4; 204; 304) eingeführt wird.

3. Befestigungseinheit nach Anspruch 1 oder 2, in welcher zwei Betätigungselemente (74; 113; 213; 313) einander gegenüber angeordnet sind, um den Keilmechanismus zu betätigen, wobei die Betätigungselemente (74; 113; 213; 313) durch einen Monteur zueinander bewegt werden können, indem sie zusammengepresst werden.

4. Befestigungseinheit nach einem der vorhergehenden Ansprüche, in welcher der Keilmechanismus in der Weise positioniert ist, dass dieser in rechten Winkeln zur Längsachse des Ankerteils (4; 204; 304) betätigt werden kann.

5. Befestigungseinheit nach einem der Ansprüche 1 bis 4, in welcher das Keilelement (111; 209; 309) beweglich mit dem Tragelement (110; 203; 303) verbunden ist.

6. Befestigungseinheit nach einem der vorhergehenden Ansprüche, in welcher der Keilmechanismus ein rückstellendes Federelement (77; 81; 114; 216; 305, 316) umfasst, das so ausgebildet ist, dass dieses den Keilmechanismus von einem betätigten Zustand in einen nicht betätigten Zustand bringen kann.

7. Befestigungseinheit nach Anspruch 6, in welcher das rückstellende Federelement (77; 81; 114; 216; 305, 316) mit dem Keilelement (75; 111; 209; 309) verbunden ist, um Letzteres aus dem betätigten Zustand aus dem Raum zwischen dem Lagerelement (2; 202; 302) und dem Ankerteil (4; 204; 304) zurückzuziehen.

8. Befestigungseinheit nach Anspruch 6 oder 7, in welcher das rückstellende Federelement (81) an dem Metall-Lagerelement (2) lagert.

9. Befestigungseinheit nach einem der vorhergehenden Ansprüche, in welcher das Tragelement (6; 203; 303) mit Beinen (62; 205; 305) versehen ist, die sich jeweils in einer Richtung weg von dem Lagerelement (2) erstrecken, bis dass ein bodenseitiges Endes des jeweiligen Beins unter dem Ankerteil (4; 204; 304) liegt.

10. Befestigungseinheit nach Anspruch 9, in welcher das Ankerteil (4) mit Öffnungen (8) versehen ist, durch welches sich die Beine (62) hindurch erstrecken.

11. Befestigungseinheit nach Anspruch 10, in welcher die Öffnungen (8) in dem Ankerteil (4) an eine vorzugsweise mit Gewinde versehene Bohrung (7) angrenzen, die in dem Ankerteil vorgesehen ist.

12. Befestigungseinheit nach einem der Ansprüche 9 bis 11, in welcher das bodenseitige Ende wenigstens eines der Beine (62) mit dem Federelement (63) versehen ist, wobei das Federelement hinter die Bodenseite des Ankerteils (4) greift.

13. Befestigungseinheit nach einem der vorhergehenden Ansprüche, in welcher das Tragelement (203; 303) Beine (205; 305) hat, die sich jeweils entlang einer Längsseite des Ankerteils (204; 304) erstrecken, wobei vorzugsweise zwei Beine einander gegenüberliegend angeordnet sind.

14. Befestigungseinheit nach einem der vorhergehenden Ansprüche, in welcher das Tragelement (203; 303) einen Boden (206; 306) hat, welcher die bodenseitigen Enden der Beine (205; 305) miteinander verbindet, und welcher sich unter das Ankerteil (204; 304) erstreckt.

15. Befestigungseinheit nach Anspruch 14, in welcher die ein oder mehreren Federelemente (208; 308) vom Boden (206; 306) nach oben vorstehen und an das Ankerteil (204; 304) angreifen.

16. Befestigungseinheit nach einem der vorhergehenden Ansprüche, in welcher das Tragelement (6) einen Ringkörper (61) umfasst, welcher mit dem Lagerelement (2) mithilfe von Kupplungselementen (66, 68, 69) verbunden ist und von welchem sich die Beine (62) erstrecken.

17. Befestigungseinheit nach einem der vorhergehenden Ansprüche, in welcher das Tragelement (110; 203; 303) und der Keilmechanismus in einem Stück hergestellt sind, vorzugsweise aus Kunststoff.

18. Befestigungseinheit nach einem der Ansprüche 1 bis 16, in welcher das Tragelement (6) und der Keilmechanismus aus separaten Elementen gebildet sind, vorzugsweise aus Kunststoff.

## Revendications

1. Ensemble de fixation pour fixer un objet sur un élément à section profilée avec des rebords qui délimitent une fente longitudinale entre eux, en particulier un élément à section profilée du type profil en forme de C, lequel ensemble de fixation comprend :
un élément de palier métallique (2 ; 202 ; 302) qui a une face de palier (3) qui est conçue pour s'appuyer contre l'extérieur de l'élément à section profilée,
une partie d'ancrage métallique allongée (4 ; 204 ; 304) qui est située sur le côté inférieur de la face de palier (3) de l'élément de palier (2 ; 202 ; 302) et a des parties d'extrémité axiale (5),
un élément de support (6 ; 110 ; 203 ; 303) pour la partie d'ancrage (4 ; 204 ; 304), lequel élément de support est prévu avec un ou plusieurs éléments de ressort (63, 66 ; 208 ; 308) et est raccordé de manière facultativement amovible à l'élément de palier (2 ; 202 ; 302) et lequel élément de support (6 ; 110 ; 203 ; 303) supporte la partie d'ancrage (4 ; 204 ; 304) de manière élastique de sorte que la partie d'ancrage (4 ; 204 ; 304) peut monter et descendre par rapport à l'élément de palier (2 ; 202 ; 302),
dans lequel on trouve un espace de réception entre l'élément de palier (2 ; 202 ; 302) et chaque partie d'extrémité axiale (5) de la partie d'ancrage (4 ; 204 ; 304), lequel espace de réception est accessible à partir du côté de l'ensemble de fixation (1 ; 101 ; 201 ; 301) et est conçu pour recevoir un rebord de l'élément à section profilée,
de sorte que l'ensemble de fixation (1 ; 101 ; 201 ; 301) et sa partie d'ancrage (4 ; 204 ; 304) peuvent être alignés avec la fente longitudinale et la partie d'ancrage (4 ; 204 ; 304) peut être introduite dans l'élément à section profilée par la fente longitudinale et de sorte qu'ensuite, après rotation de l'élément de fixation (1 ; 101 ; 201 ; 301), de préférence sur un quart de tour, la partie d'ancrage (4 ; 204 ; 304) - dans un état préassemblé - s'étend selon un angle, de préférence sensiblement un angle droit, par rapport à la fente longitudinale, de sorte que les rebords sont dans les espaces de réception et que la partie d'ancrage (4 ; 204 ; 304) se bloque derrière les rebords de l'élément à section profilée, avec l'élément de support (6 ; 110 ; 203 ; 303) qui serre les rebords de l'élément à section profilée entre la partie d'ancrage (4 ; 204 ; 304) et l'élément de palier (2 ; 202 ; 302),
**caractérisé en ce que :**
l'ensemble de fixation (1 ; 101 ; 201 ; 301) comprend en outre un mécanisme d'écartement qui est effectif entre l'élément de palier (2 ; 202 ; 302) et la partie d'ancrage (4 ; 204 ; 304), lequel mécanisme d'écartement comprend au moins un élément en forme de coin (75 ; 111 ; 209 ; 309) qui peut être introduit entre l'élément de palier (2 ; 202 ; 302) et la partie d'ancrage (4 ; 204 ; 304), avec l'élément en forme de coin (75 ; 111 ; 209 ; 309) qui se met en prise avec la partie d'ancrage (4 ; 204 ; 304) et avec l'élément de palier (2 ; 202 ; 302) de sorte que lorsque le mécanisme d'écartement est actionné, la partie d'ancrage (4 ; 204 ; 304) est poussée vers le bas par rapport à l'élément de palier (2 ; 202 ; 302) et les rebords de l'élément à section profilée peuvent être reçus dans les espaces de réception lorsque l'ensemble de fixation est entraîné en rotation.

2. Ensemble de fixation selon la revendication 1, dans lequel le mécanisme d'écartement comprend un élément d'actionnement (74 ; 113 ; 213 ; 313) qui est raccordé à l'élément en forme de coin (75 ; 111 ; 209 ; 309) et suite au fonctionnement de ce dernier, l'élément en forme de coin (75 ; 111 ; 209 ; 309) est introduit dans un espace entre l'élément de palier (2 ; 202 ; 302) et la partie de l'ancrage (4 ; 204 ; 304).

3. Ensemble de fixation selon la revendication 1 ou 2, dans lequel les deux éléments d'actionnement (74 ; 113 ; 213 ; 313) sont agencés de manière opposée l'un par rapport à l'autre pour actionner le mécanisme d'écartement, lesquels éléments d'actionnement (74 ; 113 ; 213 ; 313) peuvent être déplacés l'un vers l'autre par un dispositif d'ajustement en les comprimant ensemble.

4. Ensemble de fixation selon l'une quelconque des revendications précédentes, dans lequel le mécanisme d'écartement est positionné de sorte qu'il peut être actionné à angle droit par rapport à l'axe longitudinal de la partie d'ancrage (4 ; 204 ; 304).

5. Ensemble de fixation selon l'une quelconque des revendications 1 à 4, dans lequel l'élément en forme de coin (111 ; 209 ; 309) est raccordé de manière mobile à l'élément de support (110 ; 203 ; 303).

6. Ensemble de fixation selon l'une quelconque des revendications précédentes, dans lequel le mécanisme d'écartement comprend un élément de ressort de rappel (77 ; 81 ; 114 ; 216 ; 305 ; 316) qui est conçu pour ramener le mécanisme d'écartement dans un état non opérationnel à partir d'un état opérationnel.

7. Ensemble de fixation selon la revendication 6, dans lequel l'élément de ressort de rappel (77 ; 81 ; 114 ; 216 ; 305 ; 316) est raccordé à l'élément en forme de coin (75 ; 111 ; 209 ; 309) afin de retirer ce dernier de l'état actionné à partir de l'espace entre l'élément de palier (2 ; 202 ; 302) et la partie d'ancrage (4 ; 204 ; 304).

8. Ensemble de fixation selon la revendication 6 ou 7, dans lequel l'élément de ressort de rappel (81) s'appuie contre l'élément de palier en métal (2).

9. Ensemble de fixation selon l'une quelconque des revendications précédentes, dans lequel l'élément de support (6 ; 203 ; 303) est prévu avec des pattes (62 ; 205 ; 305) dont chacune s'étend dans une direction à distance de l'élément de palier (2) jusqu'à une extrémité inférieure de la patte respective située sous la partie d'ancrage (4 ; 204 ; 304).

10. Ensemble de fixation selon la revendication 9, dans lequel la partie d'ancrage (4) est prévue avec des ouvertures (8) à travers lesquelles les pattes (62) s'étendent.

11. Ensemble de fixation selon la revendication 10, dans lequel les ouvertures (8) dans la partie d'ancrage (4) sont attenantes à l'alésage de préférence fileté (7) prévu dans la partie d'ancrage.

12. Ensemble de fixation selon l'une quelconque des revendications 9 à 11, dans lequel l'extrémité inférieure d'au moins l'une des pattes (62) est prévue avec l'élément de ressort (63), lequel élément de ressort se bloque derrière le côté inférieur de la partie d'ancrage (4).

13. Ensemble de fixation selon l'une quelconque des revendications précédentes, dans lequel l'élément de support (203 ; 303) a des pattes (205 ; 305), dont chacune s'étend le long d'un côté longitudinal de la partie d'ancrage (204 ; 304), de préférence deux pattes qui sont agencées de manière opposée entre elles.

14. Ensemble de fixation selon l'une quelconque des revendications précédentes, dans lequel l'élément de support (203 ; 303) a un fond (206 ; 306) qui raccorde les extrémités inférieures des pattes (205 ; 305) entre elles, et qui s'étend sous la partie d'ancrage (204 ; 304).

15. Ensemble de fixation selon la revendication 14, dans lequel l'au moins un élément de ressort (208 ; 308) fait saillie vers le haut à partir du fond (206 ; 306) et se met en prise avec la partie d'ancrage (204 ; 304).

16. Ensemble de fixation selon l'une quelconque des revendications précédentes, dans lequel l'élément de support (6) comprend un corps annulaire (61) qui est raccordé à l'élément de palier (2) au moyen des éléments de couplage (66, 68, 69) et à partir duquel les pattes (62) s'étendent.

17. Ensemble de fixation selon l'une quelconque des revendications précédentes, dans lequel l'élément de support (110 ; 203 ; 303) et le mécanisme d'écartement sont produits d'un seul tenant, de préférence à partir de matière plastique.

18. Ensemble de fixation selon l'une quelconque des revendications 1 à 16, dans lequel l'élément de support (6) et le mécanisme d'écartement sont formés en tant qu'éléments séparés, de préférence à partir de plastique.
